# EUROPEAN PATENT APPLICATION

(11) **EP 1 780 659 A1**
(43) Date of publication of application: **02.05.2007**
(21) Application number: 05256586.8
(22) Date of filing: 24.10.2005
(51) Int. Cl.: G06K 19/04

(54) **Optical disc with RFID TAG**

(71) Applicant: RiRF Technologies Corporation, Tapei, Taiwan R.O.C. (CN)
(72) Inventor: Yang, Cheng-Lu, Tapei, Taiwan R.O.C. (CN); Wu, Kuo-Eng, Tapei, Taiwan R.O.C. (CN)
(74) Representative: Jehan, Robert

(57) **Abstract**

An optical disc with an identification tag is provided. The identification tag may be Radio Frequency Identification (RFID) tag provided on the outer rim of the optical disc for storing identification information related to the optical disc, thereby when a plurality of optical discs are packed in a stack, identification information stored in the RFID tags at the outer rims of the optical discs can be easily read.

## Description

The present invention relates to optical discs with identification tags, and more particularly, to optical discs with identification tags on outer rims thereof.

The so-called "Radio Frequency Identification (RFID)" is a non-contact automatic identification technique, which automatically identifies target objects and obtains relevant data using radio frequency without human manipulation. Compare to other identification techniques, such as the barcode technique, the RFID technique has several advantages, for example, long life, long reading distance, data on tags can be encrypted, large data storage and information stored can be updated etc. Additionally, it is capable of identifying high-speed moving objects and a plurality of tags simultaneously, and it is easy to operate.

A typical RFID system comprises electronic tags, a read/write device and information exchange and management systems. The electronic tags are also known as RF cards that enable smart read/write and encrypted communication. A read/write device usually comprises a radio transceiver module, antenna, a controlling module and an interface circuit. Over the recent years, continuous development of the core technology of RFID has led RFID technology into a wide array of applications, such as in logistics, security and counterfeit protection etc.

Along with the rapid development of information technology, the use of computers becomes more pervasive. In another aspect, since optical discs have large storage capacity and are cheap to produce, thus they have been the major sources for storage media for computer software and multimedia information. However, reproduction technique of the optical discs easily generates the problem of piracy of optical discs.

In light of the piracy of optical discs, the German Patent No. 10112899 discloses a technique of disposing RFID tags at the center holes of the optical discs, such as Compact Discs (CDs) and Digital Versatile Discs (DVDs); while the U.S. Patent No. 5862117 also discloses a technique of providing information storage medium at the center regions of the optical discs. As such, information such as manufacturing source, content and copyright of an optical disc can be labeled in the RFID tag or the information storage medium on the surface of the optical disc. Additionally, the provision of such RFID tags or information storage media on optical discs prevents piracy of the discs.

However, during manufacturing of optical discs, manufacturers usually place the final or semi-final products in stacks. Thus, in the two abovementioned methods, one would have difficulty reading identification information stored in those optical discs stacked in the middle of the pile since the information are stored in the center portions thereof. This is a problem urgently seeking a solution.

In the light of forgoing drawbacks, an objective of the present invention is to provide an optical disc with an identification tag provided on the outer rim of the optical disc so that when a plurality of optical discs are packed in a stack, identification information stored in the RFID tags at the outer rims of the optical discs can be easily read.

Another objective of the present invention is to provide an optical disc with an identification tag, wherein the information stored in the optical disc can be used in conjunction with the identification tag and the information can also be encrypted to prevent counterfeiting of the optical disc.

In accordance with the above and other objectives, the present invention provides an optical disc with an identification tag. The optical disc with the identification tag comprises a body and the identification tag being provided on an outer rim of the body for storing identification information.

The body may comprise a first substrate and a second substrate, each having a first surface and a second surface opposite to the first surface. The areas of the first surfaces are larger than the areas of the second surfaces of the two substrates. The second surface of the first substrate is joined with the second surface of the second substrate to form a groove between the first substrate and the second substrate for receiving the identification tag.

In a preferred embodiment, there is formed a groove on the outer rim of the optical disc to embed RFID tags therein, so that when a plurality of optical discs are stacked in a pile, identification information of the optical discs can be easily read from the outer rims thereof. Additionally, contents stored in the optical disc *per se* (e.g. computer program or multimedia information) can be used in conjunction with information stored in the identification tag (e.g. ID code, password, version information related to the optical disc on which they are provided), and further the information stored in the identification tag can be encrypted to achieve the objective of preventing counterfeiting.

The present invention can be more fully understood by reading the following detailed description of the preferred embodiments, described by way of example only, with reference made to the accompanying drawings, wherein:
Fig. 1 is a schematic diagram showing the structure of an optical disc with a tag according to the present invention;
Fig. 2A to Fig. 2D show the manufacturing steps of a sectional face of an optical disc with an identification tag according to a first embodiment of the present invention;
Fig. 3 shows another embodiment of the present invention after completing the processes of Fig. 2B;
Fig. 4A to Fig. 4C show the manufacturing steps of a sectional face of an optical disc with an identification tag according to a second embodiment of the present invention;
Fig. 5A to Fig. 5C show the manufacturing steps of a sectional face of an optical disc with an identification tag according to a third embodiment of the present invention;
Fig. 6A shows the top view of an optical disc with an identification tag according to a fourth embodiment of the present invention; and
Fig. 6B shows another embodiment of Fig. 6A.

The present invention is described by the following specific embodiments. Those with ordinary skills in the arts can readily understand the other advantages and functions of the present invention after reading the disclosure of this specification. The present invention can also be implemented with different embodiments. Various details described in this specification can be modified based on different viewpoints and applications without departing from the scope of the present invention.

The following embodiments further describe the technique of the present invention in detail, but they are not to limit the scope of the present invention in any way.

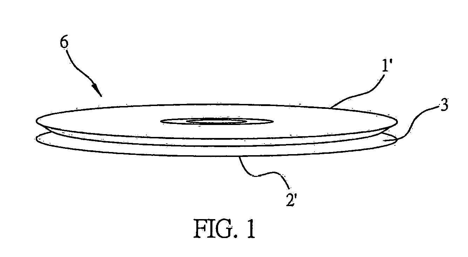

Fig. 1 is a schematic diagram showing the structure of an optical disc with a tag according to the present invention. The present invention applies the RFID technique in optical discs, such as VCD/CD/DVD discs. The disc can be a conventional circular disc, and can also be a card-type disc with a rectangular perimeter.

As shown in Fig. 1, the optical disc of the present invention is made of a body 6 formed by joining a first substrate 1' and a second substrate 2'. The first substrate 1' and the second substrate 2' are metallic material (such as aluminum or silver) reflective layers with plane surfaces and trough structures thereon for generating different reflective effects when a laser beam is projected on the reflective layers, such that an optical disc drive (not shown herein) may read required information. It should be noted that the metallic reflective layers are necessary components in an ordinary optical disc and well-known in the art, thus their manufacturing process will not be described further.

Each of the outer rims of the first substrate 1' and the second substrate 2' has a cutting edge, such that the outer rim of the body 6 formed by joining the first substrate 1' and the second substrate 2' forms a groove 3. The shape of this groove 3 can be U shape, V shape, concave or 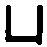 shape, depending on the cutting shapes at the side surface of the first substrate 1' and the second substrate 2'.

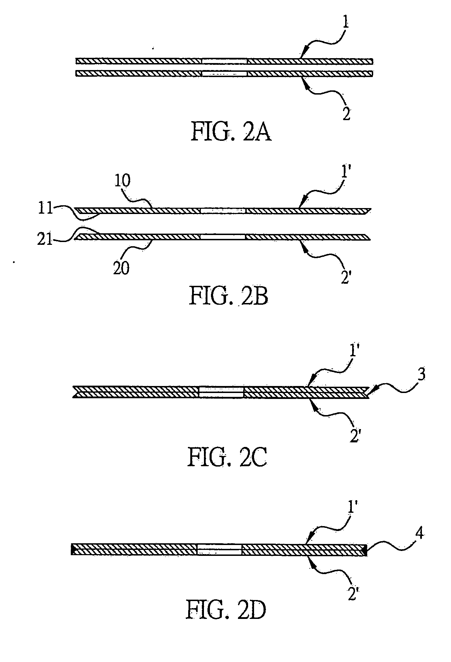

The groove 3 is used to contain an identification tag, including a RFID integrated chip (IC) and components such as an antenna electrically connected to the IC (all not shown). The IC can be used to store identification data related to the optical disc, for example, ID code, read/write password, information of manufacturer and content provider and copyright of the optical disc. Moreover, the information stored in the RFID tag can be encrypted for counterfeit proof. The antenna assumes the shape of a strip, such that it can be contained in the groove 3 at the outer rim of the optical disc. Additionally, the outer portion of the groove 3 at the outer rim of the optical disc is sealed with gel 4 to protect the RFID tag and also to securely embed the RFID tag inside the groove 3 (as shown in Fig. 2D below). It should be noted that the RFID IC and the antenna electrically connected to the IC are components well known in the traditional RFID art, so their structures and functions will not be further described for conciseness.

Fig. 2A to Fig. 2D show the manufacturing steps of a sectional face of an optical disc with an identification tag according to a first embodiment of the present invention. In this embodiment, the optical disc of the present invention is made by joining two substrates together. As shown, a first substrate 1 and a second substrate (referring to Fig. 2A) are prepared; then the outer rims of the first substrate 1 and the second substrate 2 are respectively canted to form oblique surfaces at the outer rims of the first substrate 1' and the second substrate 2' (referring to Fig. 2B), wherein the first substrate 1' at the upper side has a first surface 10 and the second surface 11 opposite thereto. After the canting process of the outer rim of the first substrate 1', the area of the first surface 10 is larger than that of the second surface 11. The second substrate 2' at the lower side has a first surface 20 and the second surface 21 opposite thereto. After the canting process of the outer rim of the second substrate 2', the area of the first surface 20 is larger than that of the second surface 21. Thereafter, the second surface 11 of the first substrate 1' is joined with the second surface 21 of the second substrate 2'. Since the area of the first surface 10 of the first substrate 1' is larger than that of the second surface 11 thereof, and the area of the first surface 20 of the second substrate 2' is larger than that of the second surface 21 thereof, thus when the second surface 11 of the first substrate 1' is joined to the second surface 21 of the second substrate 2', the outer rim at the joint of the first substrate 1' and the second substrate 2' forms a groove 3 (referring to Fig. 2C). The groove can be U-shaped, V-shaped, concaved or LI-shaped, preferably one that is able to receive an IC of an identification tag. Finally, a RFID IC and an antenna electrically connected to the IC are prepared, wherein the chip can be used to store identification information related to the optical disc, and the IC is installed in the groove 3 and the groove 3 is then sealed with a gel 4, thereby the RFID tag contained in the groove 3 can be securely embedded therein (referring to Fig. 2D).

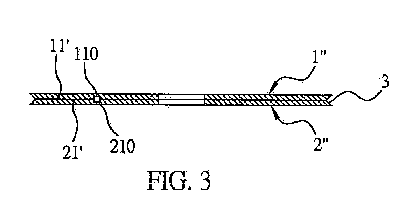

Furthermore, Fig. 3 shows another embodiment of the present invention after completing the processes of Fig. 2B described above. As shown, before joining the first substrate 1" and the second substrate 2", grooves are respectively formed on the second surface 11' of the first substrate 1" on the top and the second surface 21' of the second substrate 2" on the bottom (110 and 210), so that when adhesive is applied to the second surfaces (11' and 21') of the first substrate 1" and the second substrate 2" for joining the two surfaces together, the excessive adhesive (overflow) can be guided into the grooves (110 and 210), thereby avoiding the excessive adhesive flowing into the groove 3 used for receiving the RFID tag.

It should be noted that the amount and location of the grooves provided on the respective second surfaces 21' of the first substrate 1" and the second substrate 2" are not limited to those shown in the drawing of this embodiment. That is, they are application dependent, for example, the location of the grooves provided on the two substrates (1" and 2") are dispersed or opposite to each other.

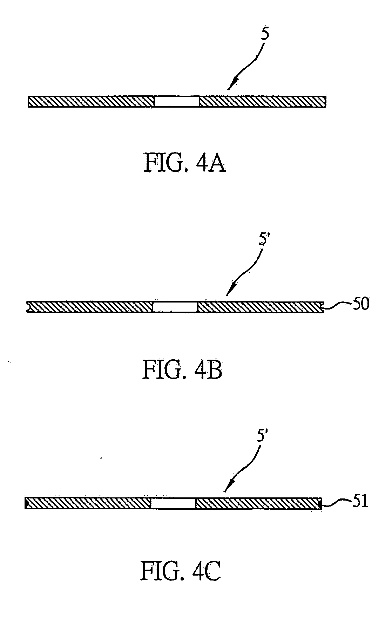

Fig. 4A to Fig. 4C show the manufacturing steps of a sectional face of an optical disc with an identification tag according to a second embodiment of the present invention. In this embodiment, the optical disc is made of a substrate 5. As shown, the substrate 5 is firstly prepared (referring to Fig. 4A). Then, the outer rim of the substrate 5' is punctured with a hole using laser beam or mechanical means so that the outer rim of the substrate 5' forms a groove 50 (referring to Fig. 4B). Finally, a RFID IC and an antenna electrically connected to the IC are prepared, wherein the chip can be used to store identification information related to the optical disc, and the IC is installed in the groove 50 and the groove 3 is then sealed, thereby the RFID tag contained in the groove 50 can be securely embedded therein (referring to Fig. 4C).

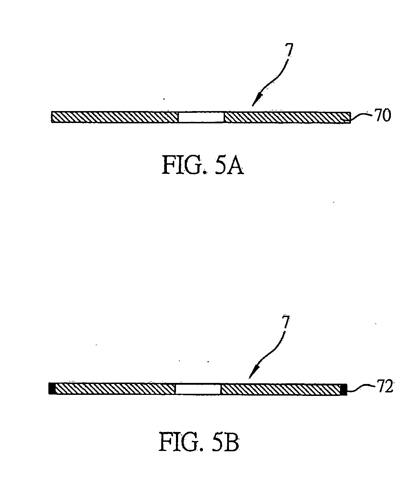

Fig. 5A to Fig. 5C show the manufacturing steps of a sectional face of an optical disc with an identification tag according to a third embodiment of the present invention. In this embodiment, the optical disc is made of a substrate 7. As shown, the substrate 7 is firstly prepared (referring to Fig. 5A). Then, a RFID IC and an antenna electrically connected to the IC are prepared, wherein the chip can be used to store identification information related to the optical disc. The RFID tag is sealed to the outer rim 70 of the substrate 7 by an adhesive 72, such that the RFID tag is protected and securely attached to the outer rim 70 of the substrate (referring to Fig. 5B).

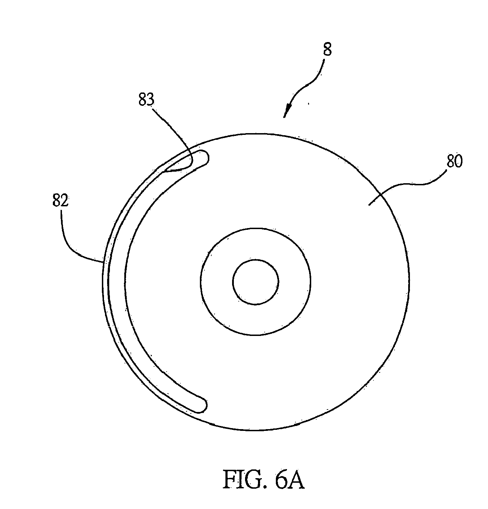

In addition, Fig. 6A shows the top view of an optical disc with an identification tag according to a fourth embodiment of the present invention. As shown, a groove 83 is formed on a surface 80 of a body 8 of the optical disc neighboring an outer rim 82, so as to receive an RFID tag containing a chip and an antenna electrically connected to the chip in the groove 83. The RFID tag is securely provided on the surface 80 of the body 8 of the optical disc by an adhesive. Additionally, this embodiment can be applied not only to a body of an optical disc made of a single substrate, but also a body of an optical disc such as the one shown in Fig. 2A where the body is consisted of the first substrate 1 and the second substrate 2. As such, a groove can be respectively formed on the top and bottom surfaces of the body of the optical disc neighboring the outer rim for receiving a RFID tag.

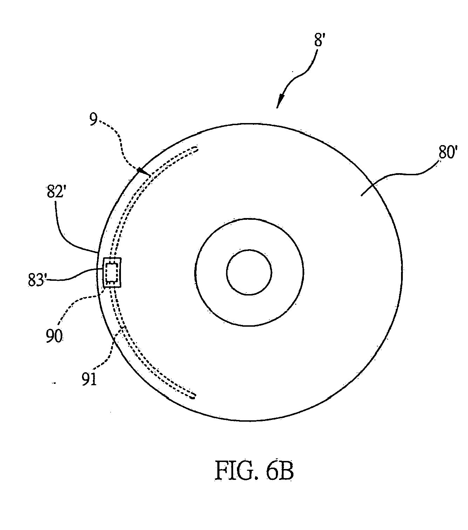

Fig. 6B shows another embodiment of Fig. 6A, wherein components that are the same with those shown in Fig. 6A, except for groove 83' and RFID tag 9, will not be discussed again. The body 9' of the optical disc shown herein has a groove 83' provided near the outer rim 82', which has a size smaller than that of the groove 83 shown in Fig. 6A. This groove 83' is used for receiving the chip 90 of the RFID tag 9, whereas the antenna 91 electrically connected to the chip 90 is printed on the surface 80' of the optical disc 8' near the outer rim 82'.

In summary of the above, the optical disc with an identification tag according to the present invention provides the identification tag on the outer rim of the optical disc, so that even if a plurality of optical discs are piled up, identification tags of those optical discs stacked in the middle of the pile can be read. Moreover, the application of the RFID technology to the optical discs enables data stored in the RFID tag to be encrypted for preventing counterfeiting. ,

The above embodiments are only used to illustrate the principles of the present invention, and they should not be construed as to limit the present invention in any way. For example, the groove 3 in Fig. 1 not only can be provided at the entire outer rim of the body 6 of the optical disc, but can also be provided at only a portion of the outer rim of the body 6 of the optical disc. Additionally, besides making the areas of the first surfaces (10 and 20) larger that those of the second surfaces (11 and 21) of the first substrate 1' and the second substrate 2'shown in Fig. 2B by means of canting, the area of the first surfaces (10 and 20) can also be made larger that those of the second surfaces (11 and 21) of the two substrate 1' and 2' by means of mould-shaping. Moreover, the groove 50 in Fig. 4B not only can be formed by the laser technique, but also by lathing using Computer Number Control (CNC) of a precision machining process. Furthermore, the IC of the identification tag not only stores the ID code, read/write password, information of manufacturer and content provider and copyright information of the optical disc, but can also store production status and/or usage related to the optical disc to facilitate management of the disc, i.e. they are application dependent. Thus, the above embodiments can be modified by those with ordinary skills in the arts without departing from the scope of the present invention as defined in the following appended claims.

## Claims

1. An optical disc with an identification tag, comprising:
a body (6); and
the identification tag being provided on an outer rim of the body for storing identification information.

2. An optical disc with an identification tag as claimed in claim 1, wherein the outer rim of the body comprises a groove (3) for receiving the identification tag.

3. An optical disc with an identification tag as claimed in claim 2, wherein the body has a surface, on which the groove is formed near the outer rim.

4. An optical disc with an identification tag as claimed in claim 2 or 3, wherein the groove is for receiving a chip of the identification tag, and an antenna electrically connected to the chip is provided on the surface of the body near the outer rim.

5. An optical disc with an identification tag of claim 4, wherein the antenna is printed on the surface of the body.

6. An optical disc with an identification tag as claimed in any of claims 2 to 5, wherein the body further comprises:
a first substrate (1') comprising a first surface (10) and a second surface (11) opposite to the first surface, the area of the first surface of the first substrate being larger than the area of the second surface of the first substrate; and
a second substrate (2') comprising a first surface (20) and a second surface (21) opposite to the first surface, the area of the first surface of the second substrate being larger than the area of the second surface of the second substrate, wherein, the second surface of the first substrate is joined with the second surface of the second substrate to form the groove between the first substrate and the second substrate.

7. An optical disc with an identification tag as claimed in claim 6, wherein the first substrate and the second substrate undergo one of a canting process and a moulding process to make the areas of the first surfaces of the first and second substrates larger that the areas of the second surfaces of the first and second substrates.

8. An optical disc with an identification tag as claimed in claim 6 or 7, further comprising at least another groove formed respectively on the second surface of the first substrate and the second surface of the second substrate, for receiving excessive adhesive that is for joining the first and second substrates, so as to avoid the excessive adhesive flowing into the groove for receiving the identification tag.

9. An optical disc with an identification tag as claimed in any of claims 2 to 8, wherein the shape of the groove is one of a U shape, a V shape, a concave shape and a 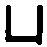 shape.

10. An optical disc with an identification tag as claimed in any of claims 2 to 9, wherein the groove further comprises a gel material (4) for securing the identification tag.

11. An optical disc with an identification tag as claimed in any of claims 2 to 10, wherein the body is a substrate and the groove is formed on the outer rim of the body by one of a laser puncturing process and a precision machining process.

12. An optical disc with an identification tag as claimed in claim 11, wherein the precision machining process is a Computer Number Control (CNC) lathing process 11.

13. An optical disc with an identification tag as claimed in any preceding claim, wherein the identification tag is a non-contact smart tag.

14. An optical disc with an identification tag as claimed in claim 13, wherein the identification tag is a Radio Frequency Identification (RFID).

15. An optical disc with an identification tag as claimed in any preceding claim, wherein the identification tag stores the identification information of the optical disc.

16. An optical disc with an identification tag as claimed in claim 15 wherein the identification tag stores information selected from at least one of the group consisting of an ID code, a read/write password, manufacturer information, content provider information, copyright information, production status and usage of the optical disc.

17. An optical disc with an identification tag as claimed in claim 16, wherein the information stored in the identification tag is encrypted.
